# EUROPEAN PATENT APPLICATION

(11) **EP 1 785 906 A2**
(43) Date of publication of application: **16.05.2007**
(21) Application number: 06255483.7
(22) Date of filing: 25.10.2006
(51) Int. Cl.: G06F 21/00

(54) **Semiconductor apparatus with protective measure against power consumption analysis**

(30) Priority: 01.11.2005 JP 2005318801
(71) Applicant: SHARP KABUSHIKI KAISHA, Osaka-shi, Osaka 545-8522 (JP)
(72) Inventor: Ohyama, Shigeo, Nara-shi, Nara 631-0006 (JP)
(74) Representative: Brown, Kenneth Richard

(57) **Abstract**

A secure semiconductor apparatus is provided which can make power consumption analysis difficult without increasing the power consumption at the peak. The apparatus comprises a logic circuit (102) for conducting a logic operation, a power consumption modifying circuit (104) for increasing or decreasing its power consumption to offset the increase or decrease in the power consumption of the logic circuit (102), and an action state control circuit (103) for randomly controlling the starting and stopping of the action of the logic circuit (102). The action state control circuit (103) randomly stops the action of the logic circuit (102) and when the power consumption of the logic circuit (102) has been declined, the action state control circuit (103) starts the action of the power consumption modifying circuit (104) to increase its power consumption to compensate for a declination in the power consumption of the logic circuit (102).

## Description

### BACKGROUND OF THE INVENTION

### 1.Field of the Invention

The present invention relates to a semiconductor apparatus and more particularly to a semiconductor apparatus equipped with a protective measure against the consumption power analysis for offering a security function of protecting its internal data from being assaulted and revealed through the power consumption analysis.

### 2.Description of the Related Art

One of such methods of assaulting and revealing the internal data stored in semiconductor apparatuses such as IC cards is known for focusing and analyzing a change in the power consumption which is determined by the action of processing in the internal circuit to determine the mutual relationship between the internal processing action and the power consumption. The known assaulting method is classified into Simple Power Analysis (SPA) and Differential Power Analysis (DPA). The assaulting method is conducted against an IC card commonly with no use of external operations and may hardly be notified when being carried out. The method is particularly hostile to a type of the IC card employed for identification of a personal.

Some measures to the assault are proposed for stopping the internal processing at random timings and providing irregular start and interval of the processing action. However, as the power consumption is declined upon stopping the internal action at random timings, its measurement may explicitly represent the timing of canceling the action.

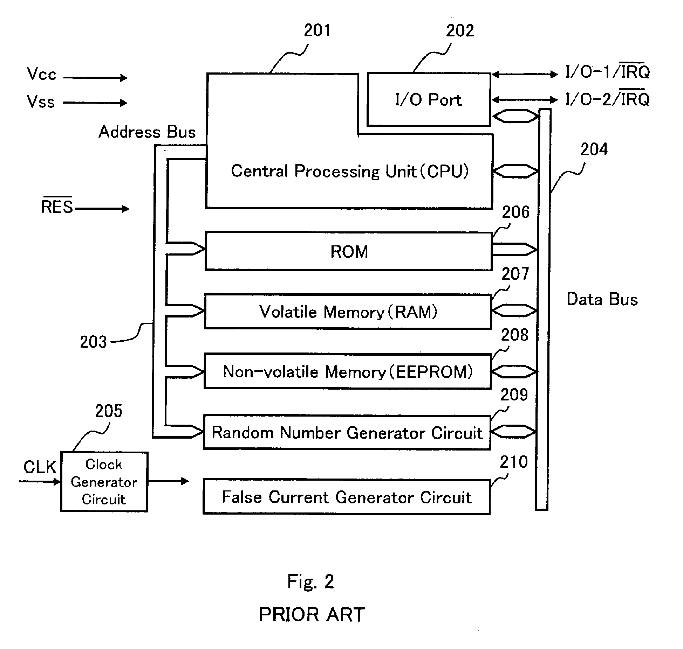

A counter measure is disclosed in Japanese Patent Laid-open Publication No. 2000-259784 (referred to as a citation hereinafter) where a false current generator circuit is used for generating a dummy consumption current at random regardless of the action in the internal circuit to deceive the power consumption analysis. The counter measure or prior art disclosed in the citation is shown in Fig. 2. The prior art has a false current generator circuit 210 provided for deceiving the power consumption analysis of the assaulting method.

However, the generation of false current consumption independent of stopping and restarting the internal processing action results in increasing the power consumption at the peak in the practice. This is disadvantageous in the system device such as an IC card where the maximum of the power consumption is predetermined. Also, the false current consumption may be eliminated by averaging a series of the power consumption waveforms. As the result, the prior art is not a perfect protective measure to the power consumption analysis.

### SUMMARY OF THE INVENTION

The present invention has been developed in view of the foregoing aspects and its object is to provide a highly secure semiconductor apparatus which can hardly increase the power consumption at the peak but discourage the power consumption analysis.

For achievement of the object of the present invention, a semiconductor apparatus with a protective measure against the power consumption analysis is provided as a first feature, which is characterized by a logic circuit for conducting a logic operation and a power consumption modifying circuit for increasing or decreasing its power consumption in order to offset the increase or decrease in the power consumption of the logic circuit.

According to the semiconductor apparatus with a protective measure against the power consumption analysis of the first feature, the sum of the power consumption outputs of the logic circuit and the power consumption modifying circuit can be monitored as the power consumption of the logic circuit from the outside. More particularly, the power consumption modifying circuit is favorably controlled in the power consumption so that when the power consumption of the logic circuit is increased, the power consumption of the power consumption modifying circuit is declined or on the other hand, when the power consumption of the logic circuit is decreased, the power consumption of the power consumption modifying circuit is elevated. Accordingly, the peak value of the sum of the power consumption outputs of the logic circuit and the power consumption modifying circuit can favorably be determined not to exceed the peak value of the power consumption of the logic circuit substantially. Also, the sum of the power consumption outputs of the logic circuit and the power consumption modifying circuit can be controlled to stay in a permissive range of variations in comparison with a change in the power consumption of the logic circuit alone. This permits a change in the sum of the power consumption outputs to be determined regardless of the action of the logic circuit, whereby the semiconductor apparatus can be as high in the security as deceiving the power consumption analysis without increasing the power consumption at the peak.

For example, in the case of that the protective measure against the power consumption analysis is not needed, the logic circuit is declined in the power consumption when action of the logic circuit stops. However, the inventive apparatus allows the power consumption of the power consumption modifying circuit to be increased during the stopping of the action of the logic circuit, and thus the sum of the power consumption outputs to remain substantially uniform regardless of the action of the logic circuit, whereby the starting and stopping of the action of the logic circuit is hardly recognized.

The semiconductor apparatus with a protective measure against the power consumption analysis of the first feature may be modified as a second feature in which an action state control circuit is provided for randomly controlling the starting and stopping of the action of the logic circuit, wherein the action state control circuit controls the starting and stopping of the action of the power consumption modifying circuit.

According to the semiconductor apparatus with a protective measure against the power consumption analysis of the second feature, the sum of the power consumption of the logic circuit and the power consumption modifying circuit can be positively controlled at random so that the sum of the power consumption is mainly the power consumption of the logic circuit when the action of the logic circuit is continued or it is mainly the power consumption of the power consumption modifying circuit when the action of the logic circuit is stopped. As the result, variant of the sum of the power consumption increases in irregularity and thus the power consumption analysis becomes more difficult.

The semiconductor apparatus with a protective measure against the power consumption analysis of the second feature may further be characterized in that the action state control circuit stops the action of the logic circuit at random and when the power consumption of the logic circuit has been declined, the action state control circuit starts the action of the power consumption modifying circuit to increase the power consumption of the power consumption modifying circuit so as to compensate for a declination in the power consumption of the logic circuit.

Since the power consumption of the power consumption modifying circuit is increased when the action of the logic circuit is stopped, the sum of the power consumption outputs of the logic circuit and the power consumption modifying circuit can remain substantially uniform regardless of the action of the logic circuit, whereby the starting and stopping of the action of the logic circuit will hardly be recognized.

The semiconductor apparatus with a protective measure against the power consumption analysis of the second feature may further be characterized in that the action state control circuit comprises a pseudo-random number generator circuit including shift registers with a feedback function.

Using a pseudo random number sequence produced by the pseudo-random number generator circuit, the random starting and stopping of the action of the logic circuit can be specifically implemented.

The semiconductor apparatus with a protective measure against the power consumption analysis of the second feature may further be characterized in that the action state control circuit comprises an intrinsic random number generator circuit including a ring oscillator which oscillates at random in response to semiconductor thermal noises and a capacitor.

Using an intrinsic random number sequence produced by the self-oscillation effect of the ring oscillator and the capacitor in the intrinsic random number generator circuit, the random starting and stopping of the action of the logic circuit can be specifically implemented.

The semiconductor apparatus with a protective measure against the power consumption analysis of the second feature may further be characterized in that the action state control circuit comprises a combination of a pseudo-random number generator circuit including shift registers with a feedback function and an intrinsic random number generator circuit including a ring oscillator which oscillates at random in response to semiconductor thermal noises and a capacitor.

Since a pseudo-random number sequence can be produced based on intrinsic random numbers and the unguessable random number sequence can be produced, the power consumption analysis is even more difficult.

Further, the semiconductor apparatus with a protective measure against the power consumption analysis of any of the previous features is characterized in that the power consumption modifying circuit comprises a transistor and a resistor.

Accordingly, the power consumption modifying circuit can be implemented with a simple arrangement where the resistor element and the transistor are modified in the power consumption by controlling the on and off actions of the transistor.

The semiconductor apparatus with a protective measure against the power consumption analysis of any of the previous features may further be characterized in that the power consumption modifying circuit consumes the power in synchronism with an action clock signal of the logic circuit.

Accordingly, since the power consumption modifying circuit consumes the power at the timing of a change in the action clock signal, it can simulate a pattern of the power consumption in the CMOS circuit of the logic circuit, the power consumption waveform in the logic circuit can hardly be distinguished between during the action and during the stopping of the action.

The semiconductor apparatus with a protective measure against the power consumption analysis of any of the previous features may further be characterized in that the power consumption modifying circuit comprises a plurality of circuits the starting and stopping of whose action can be separately controlled.

Accordingly, the power consumption of the power consumption modifying circuit can be complexly modified in the change pattern and hence hardly distinguished from the power consumption of the logic circuit in the change pattern.

The semiconductor apparatus with a protective measure against the power consumption analysis of any of the previous features may further be characterized in that the power consumption of the power consumption modifying circuit during operation varies so as to simulate a temporal change of the power consumption of the logic circuit during operation.

Accordingly, the sum of the power consumption of the logic circuit and the power consumption modifying circuit can hardly be distinguished in the change pattern between during the action and during the stopping of the logic circuit, and thus furthermore the power consumption analysis becomes even more difficult.

The semiconductor apparatus with a protective measure against the power consumption analysis of any of the previous features may further be characterized in that the power consumption of the power consumption modifying circuit varies at random regardless of the action of the logic circuit.

Accordingly, any change in the power consumption of the logic circuit alone can hardly be recognized, thus furthermore the power consumption analysis becomes even more difficult.

The semiconductor apparatus with a protective measure against the power consumption analysis of any of the previous features may further be characterized in that the logic circuit includes an encryption processing circuit for carrying out an encrypting action.

Accordingly, the semiconductor apparatus can be improved in the security in which its encrypted data is inhibited from being decrypted by the power consumption analysis.

An IC card according to the present invention comprises any one of the semiconductor apparatuses with a protective measure against the power consumption analysis described above.

Accordingly, the IC card can be improved in the security in which its internal action is hardly analyzed by the power consumption analysis.

### BRIEF DESCRIPTION OF THE DRAWINGS

Fig. 1 is a block diagram of a system arrangement of a semiconductor apparatus with a protective measure against the power consumption analysis showing the first embodiment of the present invention;
Fig. 2 is a block diagram of a system arrangement of a conventional semiconductor apparatus with a protective measure against the power consumption analysis disclosed in the citation;
Fig. 3 is a power consumption waveform diagram showing the waveforms of power consumption outputs in the semiconductor apparatus with a protective measure against the power consumption analysis according to the present invention, a common semiconductor apparatus with no protective measure against the power consumption analysis, and the conventional semiconductor apparatus with a protective measure against the power consumption analysis disclosed in the citation;
Fig. 4 is a circuitry diagram showing one example of a power consumption modifying circuit;
Fig. 5 is a circuitry diagram showing another example of the power consumption modifying circuit;
Fig. 6 is a circuitry diagram showing one example of an action state control circuit;
Fig. 7 is a waveform timing chart showing the relationship between the timing signals for controlling the action of the action state control circuit shown in Fig. 6 and the waveform of the power consumption in the power consumption modifying circuit;
Fig. 8 is a circuitry diagram showing the random number generator circuit in the action state control circuit implemented by a pseudo-random number generator circuit;
Fig. 9 is a circuitry diagram showing the random number generator circuit in the action state control circuit implemented by an intrinsic random number generator circuit;
Fig. 10 is a circuitry diagram showing the random number generator circuit in the action state control circuit implemented by a combination of a pseudo-random number generator circuit and an intrinsic random number generator circuit;
Fig. 11 is a block diagram showing a system arrangement of an encryption processing apparatus in a semiconductor apparatus with a protective measure against the power consumption analysis in the second embodiment of the present invention;
Fig. 12 is a circuitry diagram showing a further example of the power consumption modifying circuit;
Fig. 13 is a power consumption waveform simulatively showing the waveform of a power consumption output in the power consumption modifying circuit shown in Fig. 12; and
Fig. 14 is a power consumption waveform showing an example of the waveform of a power consumption output in the semiconductor apparatus with a protective measure against the power consumption analysis according to the present invention.

### DETAILED DESCRIPTION OF THE INVENTION

Some embodiments of the present invention will be described in the form of a semiconductor apparatus with a protective measure against the power consumption analysis (referred to as an inventive apparatus hereinafter) according to the present invention, referring to the relevant drawings.

### (First Embodiment)

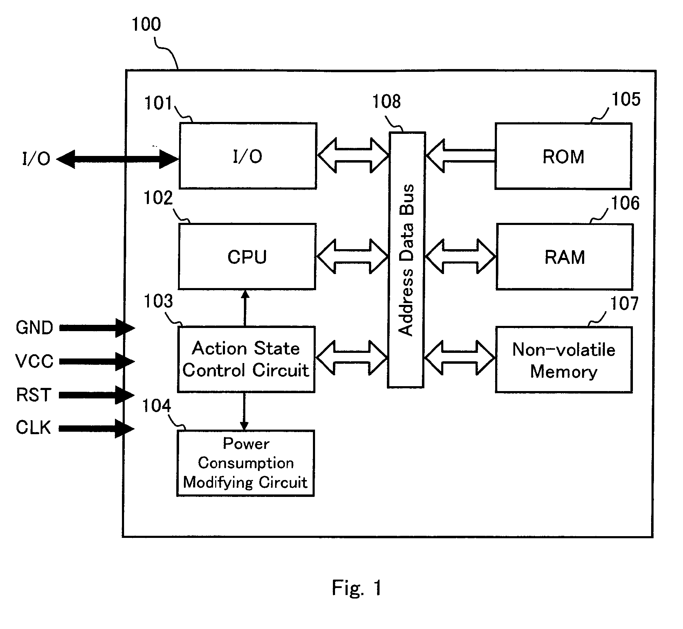

Fig. 1 illustrates a system arrangement of the inventive apparatus 100 with a protective measure against the power consumption analysis. As shown in Fig. 1, the inventive apparatus 100 includes an I/O interface 101, a central processing unit (CPU equivalent to a logic circuit) 102, an action state control circuit 103, a power consumption modifying circuit 104, a ROM 105, a RAM 106, a non-volatile memory 107, and an address data bus 108. Those components excluding the power consumption modifying circuit 104 are connected to one another through the address data bus 108. The CPU 102 is operated by a program stored in the ROM 105 for communicating via the I/O interface 101 to the outside and saving processed data in the non-volatile memory 107. The RAM 106 is a memory for temporarily saving the data for operating the CPU 102.

The action state control circuit 103 is provided for randomly controlling the starting and stopping of each action in the CPU 102 and the power consumption modifying circuit 104 in order to reject an attempt of the power consumption analysis from the outside. More specifically, the starting and stopping of each action in the CPU 102 and the power consumption modifying circuit 104 is controlled at random by the action state control circuit 103, whereby the action of the power consumption modifying circuit 104 can be stopped while the CPU 102 is operating or the action of the CPU 102 can be stopped while the power consumption modifying circuit 104 is operating. As the result, it may be judged from the power consumption of the inventive apparatus 100 that the CPU 102 stays in the action at all times, hence deceiving the power consumption analysis. For stopping the action of the CPU 102, there are some techniques, for example, of terminating the feed of clock signals to the CPU 102 and of shifting the CPU 102 to the standby mode.

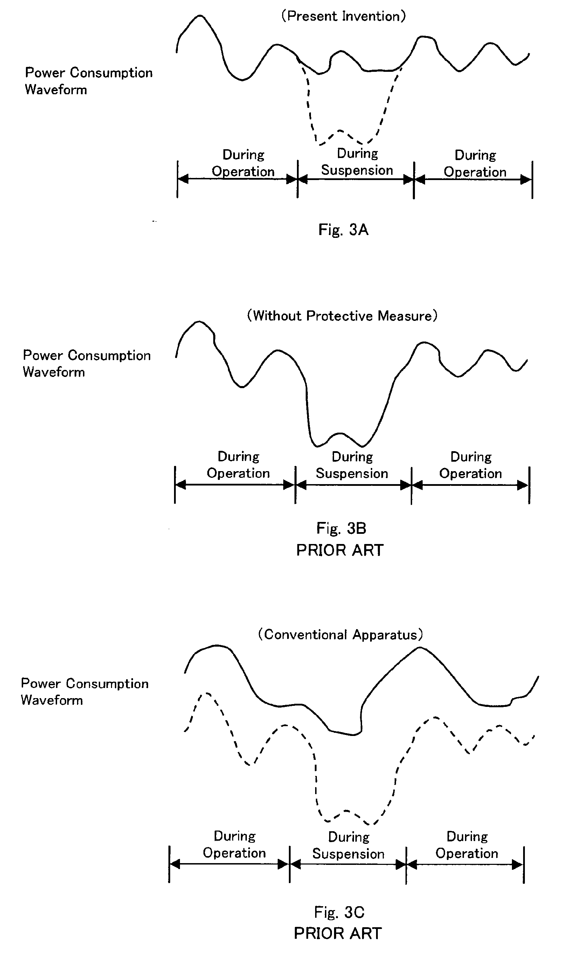

Figs. 3A to 3C schematically illustrate the waveforms of the power consumption outputs in the inventive apparatus 100, a common semiconductor apparatus with no protective measure against the power consumption analysis, and the conventional semiconductor apparatus with no protective measure against the power consumption analysis disclosed in the previous citation respectively for comparison. When the protective measure against the power consumption analysis is not equipped as shown in Fig. 3B, the overall power consumption is clearly declined when the action of the CPU or logic circuit to be subjected to the power consumption analysis is stopped. Even when the action of the logic circuit is randomly stopped, the interval of the cancellation is found from the waveform of the power consumption. Accordingly, the actual period of processing can be calculated, hence terminating the effect of the random controlling action.

As shown in Fig. 3C, the protective measure against power consumption analysis disclosed in the citation produces a dummy consumption current regardless of the action of the logic circuit to be analyzed for inhibiting the attempt of analyzing the action of the logic circuit from the outside. However, since the power consumption in the logic circuit is added with the dummy consumption current, its peak will increase. In the inventive apparatus 100 shown in Fig. 3A, only when the action of the CPU (logic circuit) 102 is stopped and the overall power consumption is declined, the power consumption modifying circuit 104 is turned on for generating a degree of the power consumption to compensate a drop in the power consumption of the CPU 102. Accordingly, the attempt of finding the drop in the power consumption of the CPU 102 from the outside can be interrupted without increasing the power consumption at the peak in the inventive apparatus 100.

The action state control circuit 103 and the power consumption modifying circuit 104 in the inventive apparatus 100 will now be described in more detail.

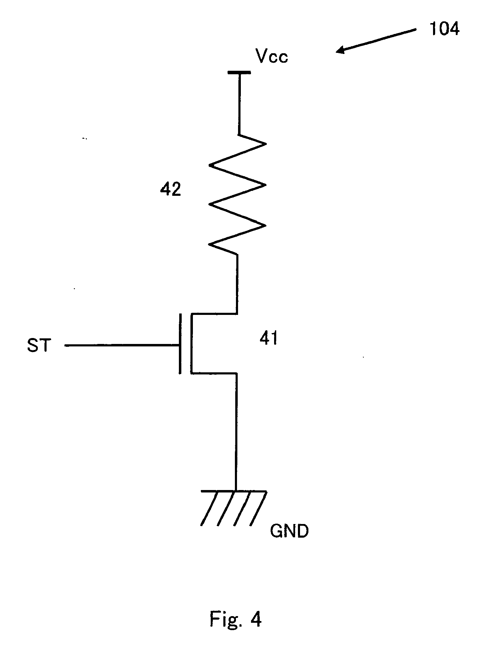

Fig. 4 illustrates an arrangement of the power consumption modifying circuit 104. The power consumption modifying circuit 104 comprises a series circuit of a MOS transistor 41 and a resistor element 42 disposed between the source voltage Vcc and the grounding voltage GND. The starting and stopping of the power consumption circuit 104 is controlled by the transistor 41 turning on and off, whereby the power consumption can favorably be modified. The degree of the power consumption is determined by the resistance of the resistor element 42 and the turn-on resistance of the transistor 41. When the turn-on resistance of the transistor 41 is fairly lower than the resistance of the resistor element 42, the power consumption can fundamentally be determined by the resistance of the resistor element 42. For example, the resistance of the resistor element 42 is set to 4 kΩ for generating a power consumption of 1 mW at the source voltage Vcc=2V. The turning on and off of the transistor 41 can be triggered by a timing control signal ST released from the action state control circuit 103 which will be explained later.

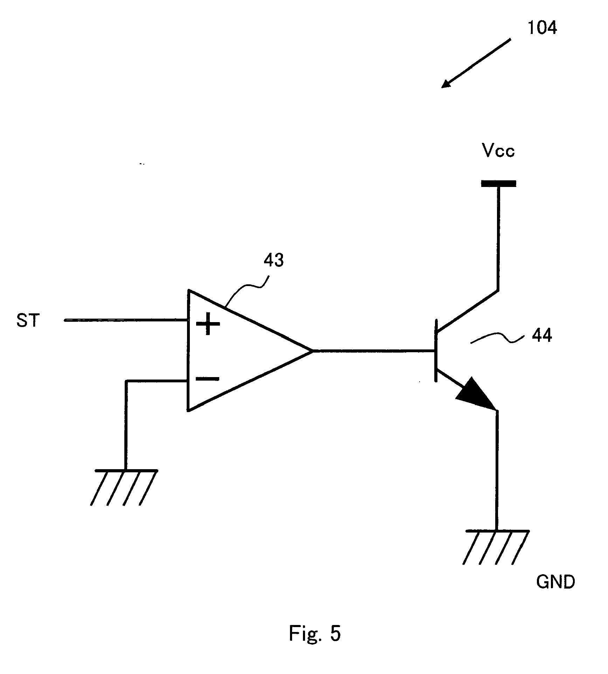

Fig. 5 illustrates another arrangement of the power consumption modifying circuit 104. The power consumption modifying circuit 104 in this case comprises an operational amplifier 43 and a transistor 44 connected in series to each other. More specifically, the output of the operational amplifier 43 is connected to the base of the transistor 44 which is in turn connected at the collector and the emitter to the source voltage Vcc and the grounding voltage GND respectively. The starting and stopping of the power consumption modifying circuit 104 is controlled by changing the input to the operational amplifier 43, whereby the power consumption can favorably be modified. The input to the operation amplifier 43 can be determined by the timing control signal ST released from the action state control circuit 103.

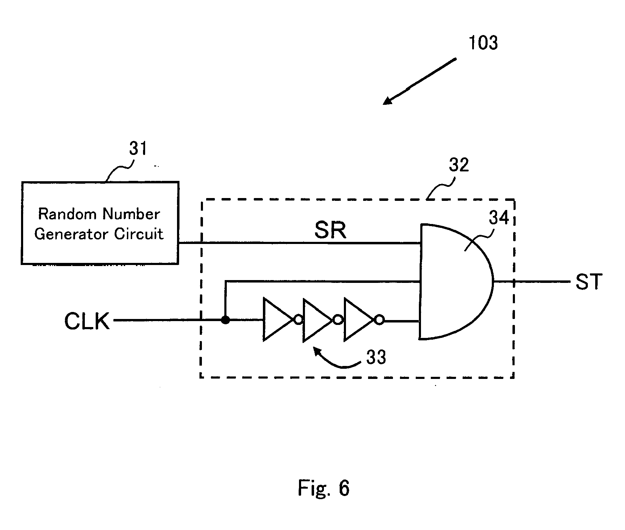

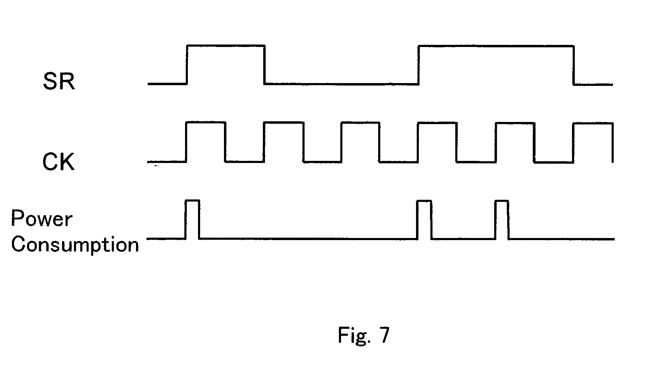

Fig. 6 illustrates an arrangement of the action state control circuit 103. As shown in Fig. 6, the action state control circuit 103 comprises a random number generator circuit 31 and a timing control circuit 32. The timing control circuit 32 is provided for controllably timing of the starting and stopping of the action of the power consumption modifying circuit 104. The timing control circuit 32 shown in Fig. 6 comprises an odd number of inverters 33 and a three-input AND circuit 34. The AND circuit 34 receives at the inputs an action clock signal CLK for timing the action of the CPU 102, an action clock signal CLK' shifted in the phase by the odd number of inverters 33, and an on/off control signal SR randomly released from the random number generator circuit 31. The AND circuit 34 releases the timing control signal ST for turning the power consumption modifying circuit 104 on for a duration of time which is shorter than a half the cycle of the action clock signal CLK after the timing at the rise of the action clock signal CLK during the high level (at the higher voltage) of the on/off control signal SR. In the circuit shown in Fig. 6, the odd number of the inverters 33 are connected in a row for delaying the action clock signal CLK in order to release the timing control signal ST upon being timed with the rise of the action clock signal CLK. The on/off control signal SR is designed for randomly controlling the starting and stopping of the action of the CPU 102. When the on/off control signal SR is turned to the high level, the action of the CPU 102 is stopped and the timing control signal ST is released. As shown in a waveform timing chart of Fig. 7, with the on/off control signal SR remaining at the high level and the action of the CPU 102 disabled, the power consumption modifying circuit 104 intermittently generates the power consumption upon being timed with the rise of the action clock signal CLK. Since the power consumption in the power consumption modifying circuit 104 is produced in synchronism with the rise timing of the action clock signal CLK as shown in Fig. 7, its waveform can simulate that of a consumption current in a logic circuit which is composed of CMOS circuits and generates a dynamic consumption current such as a through current, a charging current, or a discharging current generated upon the timing of the rise of the action clock signal CLK.

When the CPU 102 is composed of CMOS circuits and operated as being timed with the action clock signal CLK, its power consumption waveform at each circuit composing the CPU 102 is discontinuous in synchronism with the action clock signal CLK. In the CPU 102, the waveforms at the circuits are summed and turned smooth and continuous due to the parasitic capacitance or the parasitic inductance along the source line or the like. Similarly, discontinuous components of the power consumption produced in the power consumption modifying circuit 104 are summed and turned smooth and continuous. Accordingly, the sum of the power consumption outputs of the CPU 102 and the power consumption modifying circuit 104 exhibits a uniform, continuous waveform regardless of the starting and stopping of the action of the CPU 102.

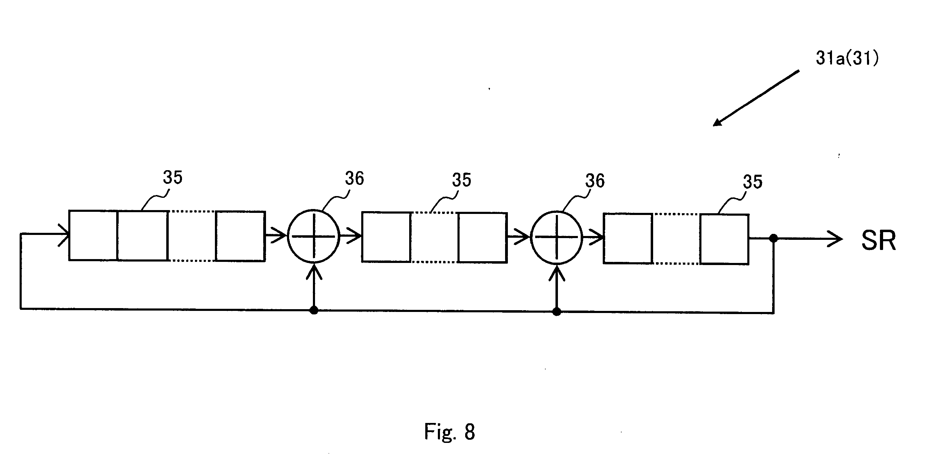

Fig. 8 illustrates an arrangement, denoted at 31a, of the random number generator circuit 31 in the action state control circuit 103. The random number generator circuit 31a shown in Fig. 8 comprises a row of shift registers 35 with a feedback function. As an exclusive OR 36 is disposed between the two adjacent shift registers 35, the random generator circuit acts as a pseudo-random number generator circuit for generating a pseudo-random number signal at long cycles. Since the CPU 102 and the power consumption modifying circuit 104 are controlled for starting and stopping the action by the action state control circuit 103 including the random number generator circuit 31a, the sum of their power consumption outputs hence exhibits a random waveform regardless of the action of the CPU 102.

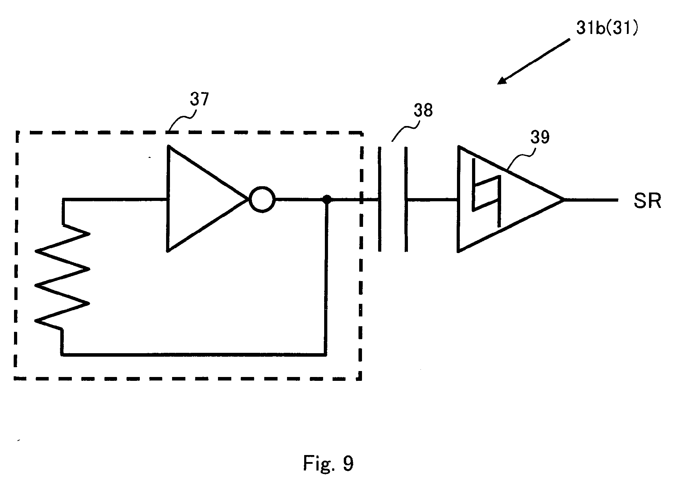

Fig. 9 illustrates another arrangement, denoted at 31b, of the random number generator circuit 31 in the action state control circuit 103. The random number generator circuit 31b shown in Fig. 9 is an intrinsic random number generator circuit composed of a ring oscillator 37, a capacitor 38, and a Schmitt trigger aided amplifier 39. The ring oscillator 37 comprises a CMOS inverter and a resistor element. Since the output of the CMOS inverter is connected via the resistor element to the input of the same, it remains fixed at such a level that the current is balanced between the p-type transistor and the n-type transistor in the CMOS inverter. However, the output of the inverter exhibits random variations due to the effect of a semiconductor thermal noise in the resistor element which is connected to the input. The random variations in the output level are converted by the Schmitt trigger aided amplifier 39 to a 0/1 signal of digital mode. Because the thermal noise results from a random physical phenomenon, the digital signal represents an intrinsic random number.

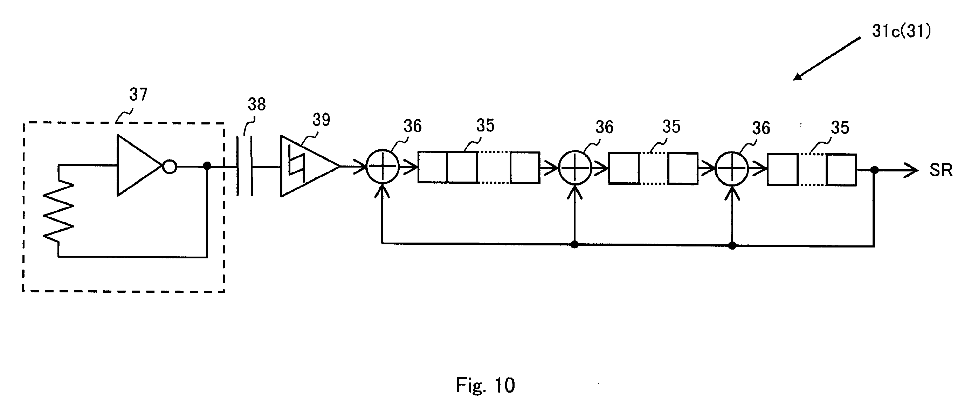

Fig. 10 illustrates a further arrangement, denoted at 31c, of the random number generator circuit 31 in the action state control circuit 103. The random number generator circuit 31c shown in Fig. 10 is a combination of the pseudo-random number generator circuit 31a of Fig. 8 and the intrinsic random number generator circuit 31b of Fig. 9 for producing a more complicated, higher quality intrinsic random number. The pseudo-random number generator circuit 31a permits the same pseudo-random numbers to be generated repeatedly at equal intervals. The intrinsic random number generator circuit 31b shown in Fig. 9 permits the random number to be varied in the quality depending on the voltage and the temperature. The random number generator circuit 31c shown in Fig. 10 can release an intrinsic random number at higher quality since its pseudo-random number generator circuit 31a receives an exclusive OR of the output of the intrinsic random number generator circuit 31b. As the CPU 102 and the power consumption modifying circuit 104 are controlled for the starting and stopping actions by the action state control circuit 103 specified with the random number generator circuit 31c, the sum of their power consumption outputs exhibits an unguessable waveform regardless of the action of the CPU 102.

### (Second Embodiment)

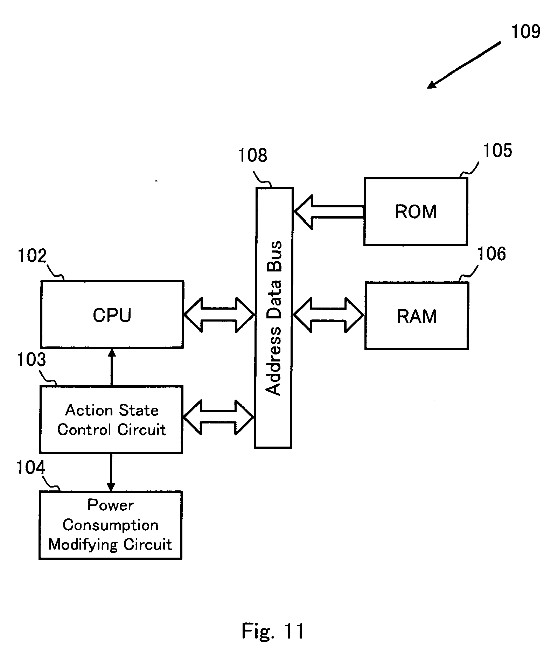

The second embodiment of the present invention will be described in the form of an encryption processing apparatus with a protective measure against the power consumption analysis. Fig. 11 illustrates a system arrangement of the encryption processing apparatus 109 according to the present invention. As shown in Fig. 11, the encryption processing apparatus 109 comprises a central processing unit (CPU equivalent to a logic circuit) 102, an action state control circuit 103, a power consumption modifying circuit 104, a ROM 105, a RAM 106, and an address data bus 108. The components excluding the power consumption modifying circuit 104 are connected to one another through the address data bus 108. The CPU 102 is operated according to a procedure of steps determined by a program stored in the ROM 105 to conduct the encoding and decoding actions such as Data Encryption Standard (DES) or Rivest-Shamir-Adleman processing using the data in the RAM 106.

The action state control circuit 103 and the power consumption varying circuit 104 are identical in the circuitry arrangement to those of the first embodiment and will thus be explained in no more detail. Since the action state control circuit 103 and the power consumption varying circuit 104 are identical to those of the first embodiment, the power consumption waveform during the encoding and decoding action of the encryption processing apparatus 109 can favorably be modified regardless of the action of the CPU 102. Accordingly, any attempt of analyzing the power consumption in the encoding action and the decoding action can be interrupted or inhibited.

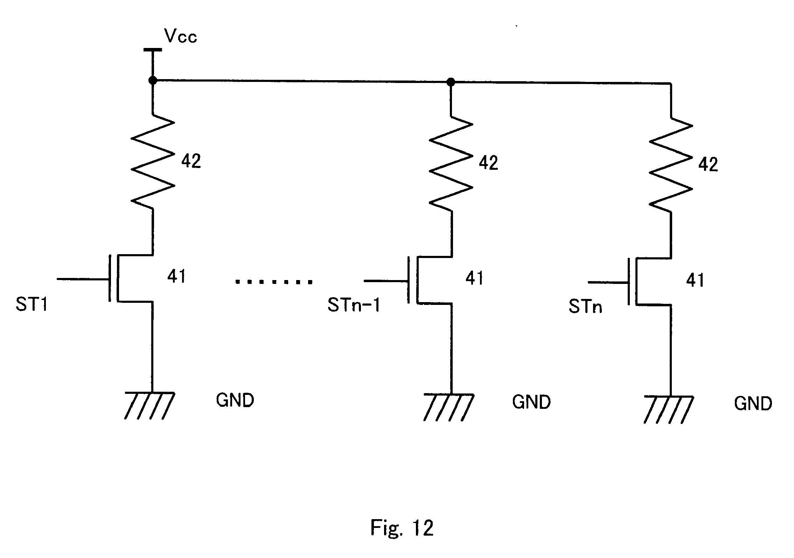

Further embodiments of the present invention will now be described.
(1) In the first and second embodiments, the action of the power consumption modifying circuit 104 is controlled by the timing control signal ST released from the action state control circuit 103. Alternatively as shown in Fig. 12, two or more series circuits, each having a MOS transistor 41 and a resistor element 42 connected in series as shown in Fig. 4, may be provided in parallel between the source voltage Vcc and the grounding voltage GND. Since the power consumption modifying circuit 104 is composed of multiple units, its power consumption for each unit can be minimized while the transistor size is declined. Also, since the units are timed separately for turning on and off, a variety of patterns of the power consumption can be produced. The units may be equal or different in the transistor size and the resistance.

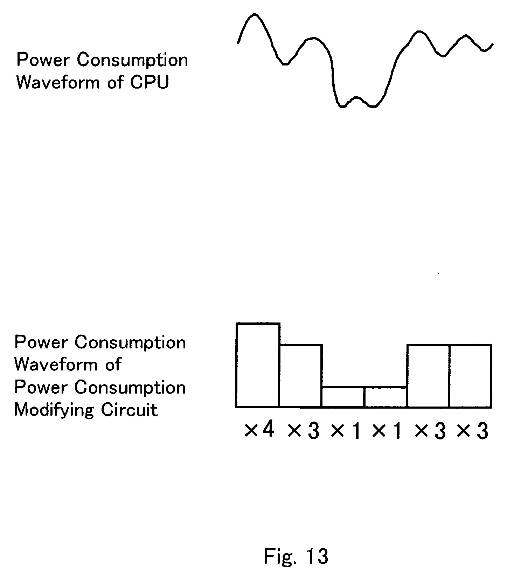

   Fig. 13 illustrates a profile of the power consumption waveform where the power consumption is dynamically modified by the power consumption modifying circuit 104 shown in Fig. 12. When the units to be turned on in the power consumption modifying circuit 104 shown in Fig. 12 are controllably determined to a limited number, they can simulate the power consumption waveform of the CPU 102. It would be understood that the number of the units to be turned on and the setting of the resistance have been predetermined through experiments and simulations with the power consumption at the peak in the CPU 102.

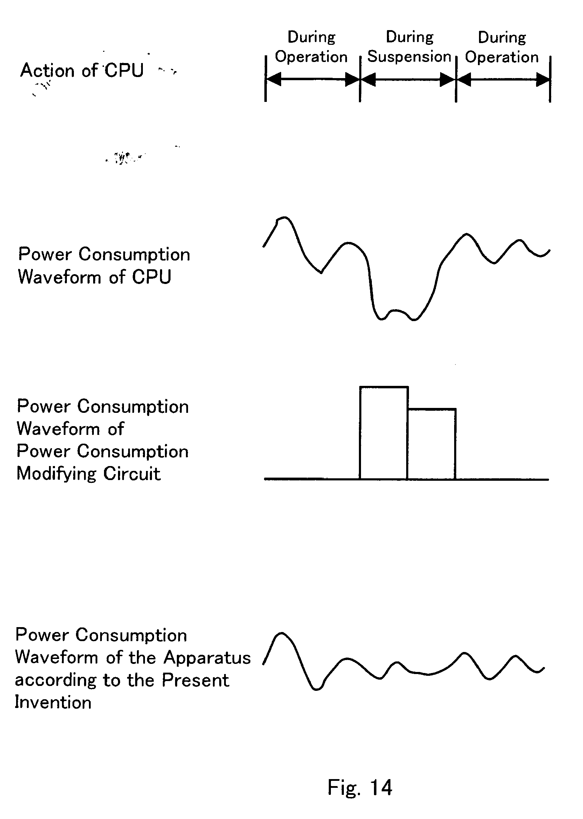

   Fig 14 schematically illustrates a profile of the power consumption waveform when the action of the CPU 102 has been stopped by the on/off control signal SR released from the action state control circuit 103 and the start of the action of the power consumption modifying circuit 104 shown in Fig. 12 is dynamically controlled using different timing control signals ST determined by the same on/off control signal SR. It is apparent that the power consumption waveform of the apparatus appears not indicating the action of the CPU 102 because the action of the power consumption modifying circuit 104 offsets the action of the CPU 102. More particularly, the units in the power consumption modifying circuit 104 are randomly controlled for the starting and stopping actions with the CPU 102 remaining inactivated, thus simulating the power consumption waveform of the CPU 102 during operation. This allows the starting and stopping action of the CPU 102 to be hardly recognized from the power consumption waveform.
   In particular, since the peak values of the power consumption of the CPU 102 during operation have been calculated from the simulation of power consumption and the starting and stopping of the action of each unit are dynamically controlled to the extent that the power consumption in the power consumption modifying circuit 104 does not exceed the peak values, the counter measure against the power consumption analysis can work successfully with no increase in the peak of the power consumption.
(2) In the first embodiment, the timing control circuit 32 shown in Fig. 6 is timed with the rise of the action clock signal CLK for releasing the timing control signal ST. Alternatively, the timing control signal ST may be released at the timing of not the rise but the fall of the action clock signal CLK or at the timing of both the rise and the fall of the signal CLK. As the power consumption waveform of the action in the CPU 102 which is simulated by the power consumption modifying circuit 104 depends on the circuitry arrangement of the CPU 102, the power consumption period of the power consumption modifying circuit 104 is calculated in response to the delay of transmission from the timing of the rise in the action of the CPU 102 thus to determine the release of the timing control signal ST. For example, the release of the timing control signal ST can be determined from an average of the transmission delay times of all flip-flops in the CPU 102.
(3) The first embodiment is not limited to any particular design of the inventive apparatus 100 but may preferably be of an IC card mountable type. The system arrangement of the IC card movable type is substantially identical to that shown in Fig. 1 and will be explained in no more detail.
(4) In the first and second embodiments, the action of the CPU 102 is stopped by stopping the feed of the action clock signal to the CPU 102 or shifting the CPU 102 to the standby mode. Alternatively, the action of the CPU 102 may be stopped in practice without stopping the feed of the action clock signal or shifting to the standby mode. For example, at the transition between a plurality of states in the procedure conducted by the CPU 102, the condition for shifting one action state to another can be deleted to cancel the action of the CPU 102. In this case, the shift from one action state to another is not carried out, hence minimizing the power consumption.
(5) In the first and second embodiments, the action state control circuit 103 is composed mainly of the random number generator circuit 31 and the timing control circuit 32. Alternatively, when the CPU 102 is designed or programmed to automatically cancel its action at random, the action state control circuit 103 may comprise the timing control circuit 32 excluding the random number generator circuit 31 so that the signal indicative of the action state can be received from the CPU 102 as the timing control signal ST. In this case, a function of the action state control circuit 103 is replace by the program for automatically stopping the action of the CPU 102 at random.

The semiconductor apparatus with a protective measure against the power consumption analysis according to the present invention is applicable to a semiconductor apparatus which has a security function for protecting the internal data from any attempt from the outside of examining the internal action through analyzing the power consumption.

## Claims

1. A semiconductor apparatus with a protective measure against power consumption analysis comprising:
a logic circuit for conducting a logic operation and
a power consumption modifying circuit for increasing or decreasing its power consumption in order to offset the increase or decrease in power consumption of the logic circuit.

2. The semiconductor apparatus according to claim 1, **characterized in that** the apparatus comprises an action state control circuit for randomly controlling a starting and stopping of an action of the logic circuit and
the action state control circuit controls a starting and stopping of an action of the power consumption modifying circuit.

3. The semiconductor apparatus according to claim 2, **characterized in that** the action state control circuit stops the action of the logic circuit at random and when the power consumption of the logic circuit has been declined, the action state control circuit starts the action of the power consumption modifying circuit to increase the power consumption of the power consumption modifying circuit so as to compensate for a declination in the power consumption of the logic circuit.

4. The semiconductor apparatus according to claims 2 or 3, **characterized in that** the action state control circuit comprises a pseudo-random number generator circuit including shift registers with a feedback function.

5. The semiconductor apparatus according to claims 2 or 3, **characterized in that** the action state control circuit comprises an intrinsic random number generator circuit including a ring oscillator which oscillates at random in response to semiconductor thermal noises and a capacitor.

6. The semiconductor apparatus according to claims 2 or 3, **characterized in that** the action state control circuit comprises a combination of a pseudo-random number generator circuit including shift registers with a feedback function and an intrinsic random number generator circuit including a ring oscillator which oscillates at random in response to semiconductor thermal noises and a capacitor.

7. The semiconductor apparatus according to any one of claims 1 to 6, **characterized in that** the power consumption modifying circuit comprises a transistor and a resistor.

8. The semiconductor apparatus according to any one of claims 1 to 7, **characterized in that** the power consumption modifying circuit consumes power in synchronism with an action clock signal of the logic circuit.

9. The semiconductor apparatus according to any one of claims 1 to 8, **characterized in that** the power consumption modifying circuit comprises a plurality of circuits a starting and stopping of whose action can be separately controlled.

10. The semiconductor apparatus according to any one of claims 1 to 9, **characterized in that** the power consumption of the power consumption modifying circuit during operation varies so as to simulate a temporal change of the power consumption of the logic circuit during operation.

11. The semiconductor apparatus according to any one of claims 1 to 10, **characterized in that** the power consumption of the power consumption modifying circuit varies at random regardless of the action of the logic circuit.

12. The semiconductor apparatus according to any one of claims 1 to 11, **characterized in that** the logic circuit includes an encryption processing circuit for carrying out an encrypting action.

13. An IC card **characterized by** comprising the semiconductor apparatus according to any one of claims 1 to 11.
